# EUROPEAN PATENT APPLICATION

(11) **EP 3 327 900 A1**
(43) Date of publication of application: **30.05.2018**
(21) Application number: 15899028.3
(22) Date of filing: 01.10.2015
(51) Int. Cl.: H02K 1/14, H02K 17/12

(54) **ASYNCHRONOUS ELECTROMAGNETIC MOTOR**

(30) Priority: 23.07.2015 KZ 20150899
(71) Applicant: Sakhnov, Alexandr Valentinovich, Astana 010000 (KZ)
(72) Inventor: Sakhnov, Alexandr Valentinovich, Astana 010000 (KZ)
(74) Representative: Herrero & Asociados, S.L.
(86) International application number: PCT/KZ2015/000017
(87) International publication number: WO 2017/014616

(57) **Abstract**

The claimed invention relates to power engineering and can be used as a drive with a wide power range. The technical result is an increase in motor efficiency. In the claimed asynchronous electromagnetic motor, a tyre-shaped stator comprises a body and at least five rows of electromagnets, which are arranged at an angle about the entire perimeter of the stator, wherein the working cores of the electromagnets extend into a hollow groove surrounding a rotor. The electromagnets are activated with the aid of a controller, which supplies a current to transverse groups of electromagnets at a plurality of points on the stator. The resulting electromagnetic field interacts with the tips of the rotor and causes it to rotate.

## Description

### Content:

1. Rotor.
2. Stator
3. Housing
4. Controller
5. Operating principle

The claimed invention relates to power-plant engineering and electrical engineering notably to devices, utilizing electromagnets energy. It can be used as the drive with a wide power range for more environmentally friendly motors, electric generators.

Invention object is to create a more effective design of electromagnetic motor, which has not only the best pulling performance, but also best economic parameters on electric power consumption with a better performance. The proposed design should ensure more effective transformation of electromagnets magnetic field to kinetic energy. Another objective is to expand environmentally friendly technical means range

Electromagnetic motor, comprising a drum rotor and stator, on which permanent magnets are installed evenly around the circumference, the radially oriented electromagnets connected with the switchboard are placed on the permanent magnets ends, N+1 permanent magnets are placed on rotor, stator permanent magnets number is equal to N, rotor permanent magnets are installed at 1-75° angle in a plane perpendicular to motor axis so that rotor and stator permanent magnets interaction force vector is directed to the rotor rotation direction (RU 2176845 C1, H 02 K 21/14, 37/14, 29/00 dated 14.07.2000) is the most similar one in technical substance.

The aim of said invention is to improve motor design by means of polarized or U-shaped electromagnets installation on the stator instead of current permanent magnets and electromagnets, what makes it possible to use magnetic energy most efficiently and maximally compensate losses specific to electric motors. Technical result achieved in this case consists in a motor performance increase.

Claimed motor consists of stator and rotor classical main components, housing, and differs from traditional motor in embodiment, unique design, which contains innovative and economic distribution and action of magnetic fields to the rotor in the comparison with the standard motor.

### 1. ROTOR.

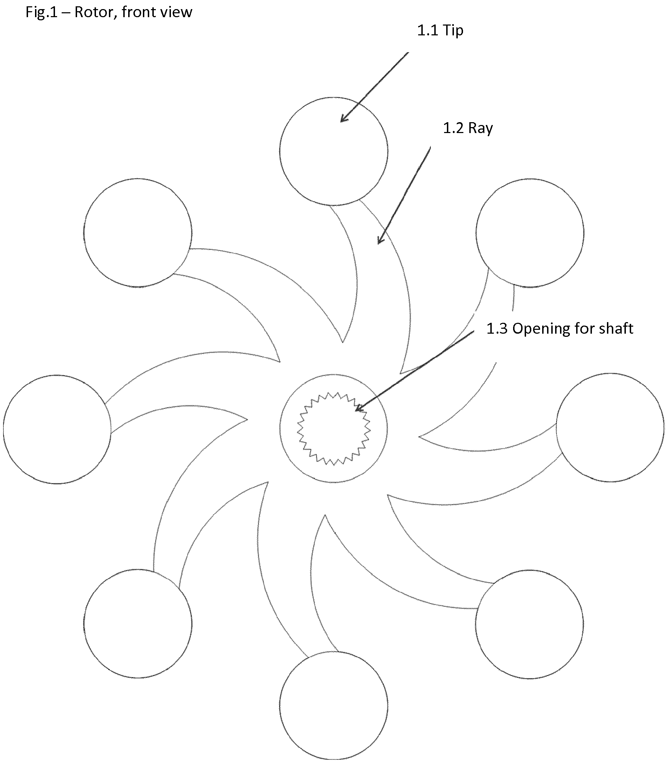

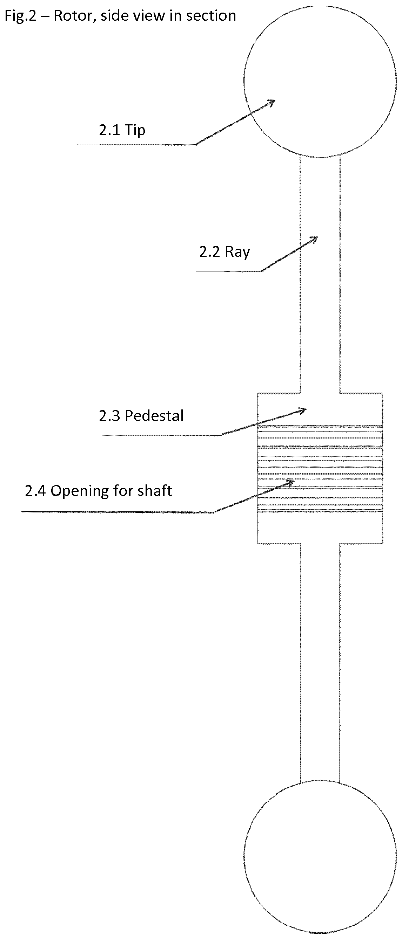

Rotor is star-shaped with radial rays (Fig.1. - 1.2. and Fig.2. - 2.2.) and tips at the ends, rays and rotor itself are made from neutral to magnetic fields material, with the purpose to avoid excitation that impeds and brakes rotation. Rays are at angle from the center, for the best strength and to achieve dynamic durability relative to rotor main movement vector, also when necessary utilization of reverse movement as supplementary one is not excluded. Oval tips made from ferromagnetic materials (Fig. 1. - 1.1. and Fig. 2. - 2.1.), that serve as rotor main processual operating components are installed at rays ends. Rays number and tips size depend on required power and are calculated with design calculations, with a view to achieve desired end pulling force. Rotor is secured with the stator in the housing. Shaft is mounted in rotor center, opening for the shaft is made serrated for the possibility of strong locking and to prevent shaft from being turned (Fig. 1. - 1.3. and Fig. 2. - 2.4.), and to transfer angular kinetic energy. Rotor center and shaft installation site undergoes peak loads, for which cause "opening" base is strengthened by enforced pedestal (Fig. 2. - 2.3.). Rotor can be both cast and assemblable.

### 2. STATOR.

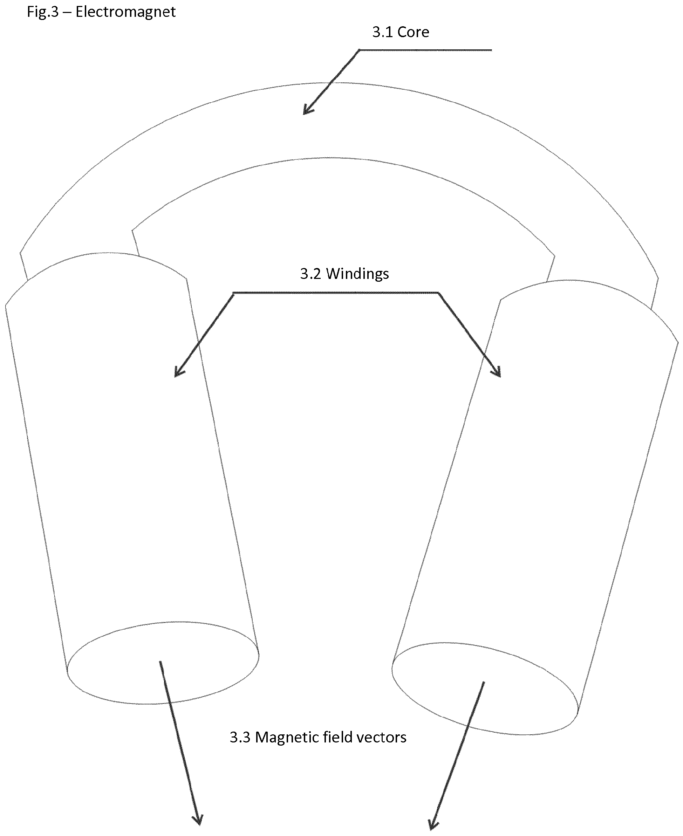

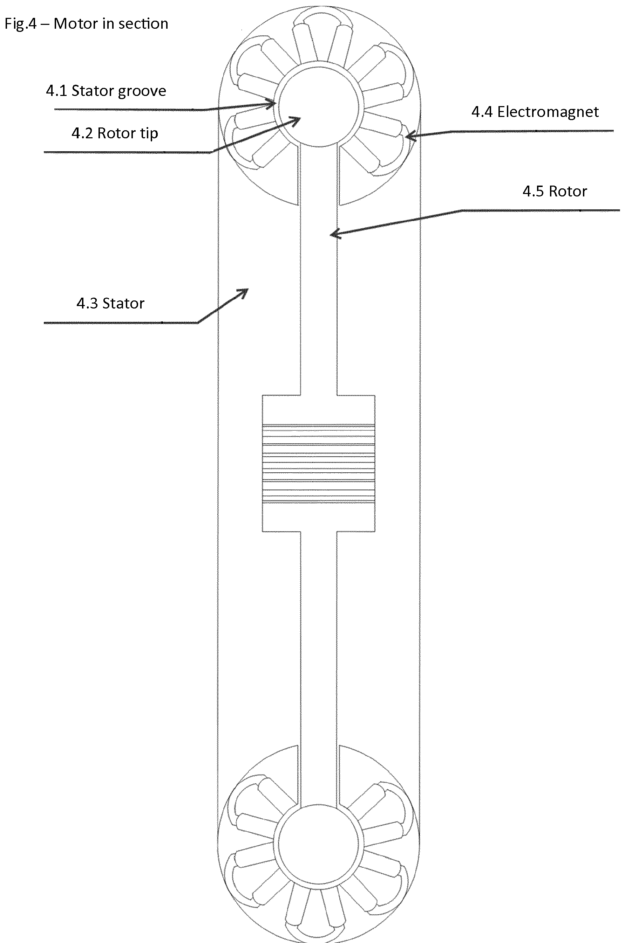

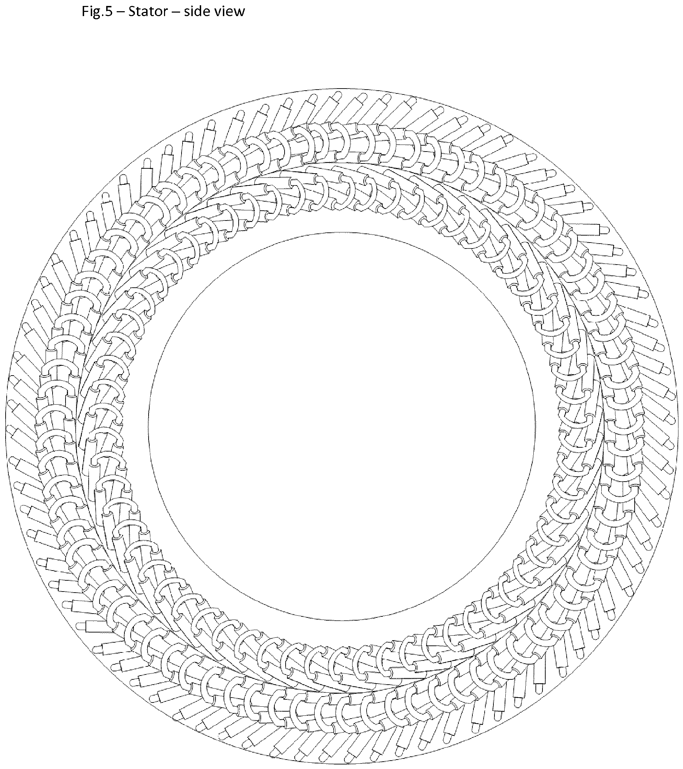

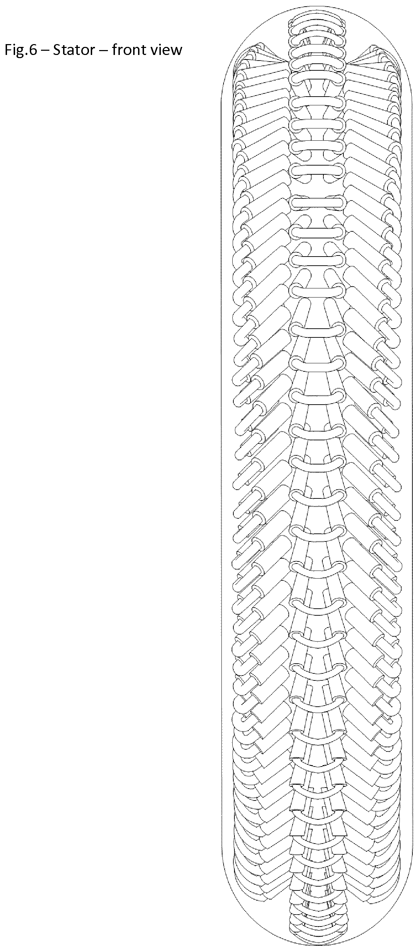

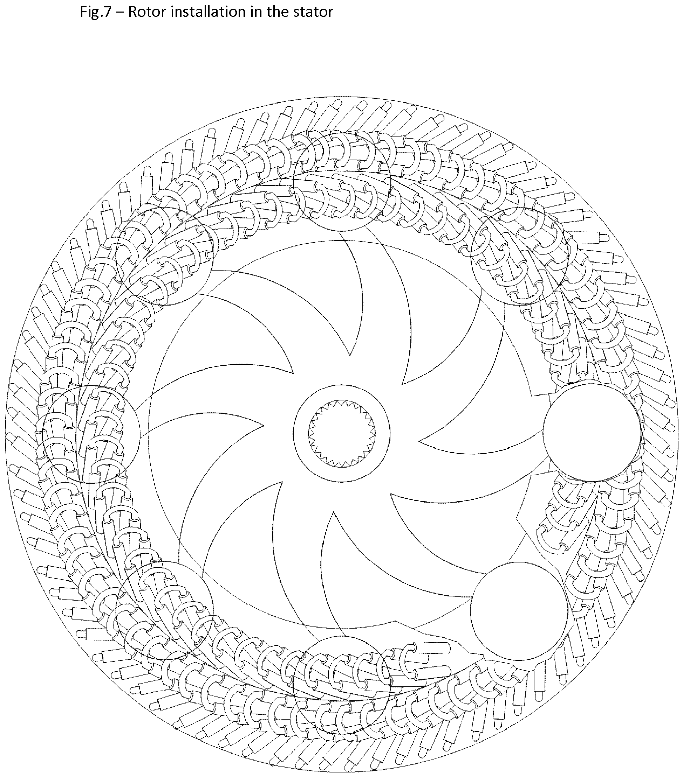

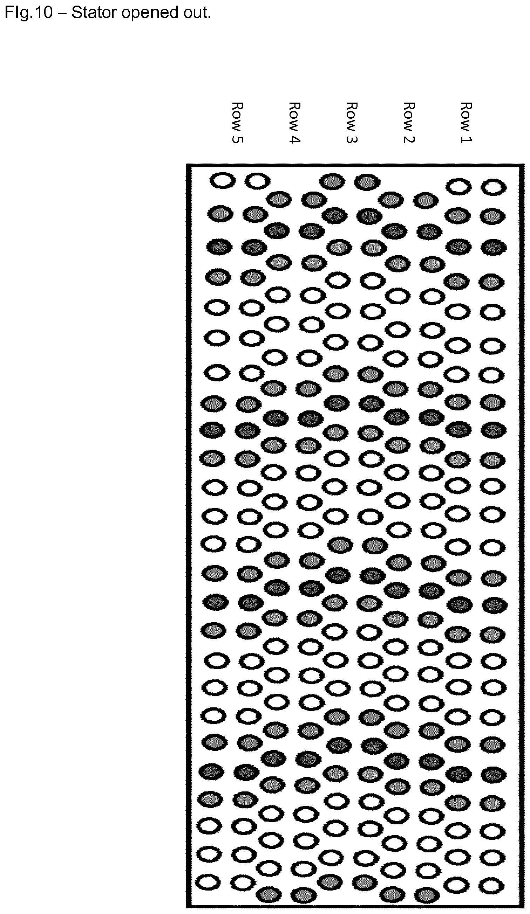

Stator housing (Fig. 4. - 4.3.) is made from insulating, absolutely inelastic material in the form of circle, in round "automobile tire" form with the groove inside for rotor tips operation. U-shaped electromagnets (Fig. 3. and Fig. 4. - 4.4.), which consist of two windings (Fig .3. - 3.2.), the coil-solenoids, connected together and installed on an isolated U-shaped core made of material with large magnetic permeability (Fig. 3. - 3.1.) are installed along entire perimeter from the outside in the housing along rotor circumference. Electromagnets are mounted and secured in stator housing in such way that electromagnets cores operating parts come out from the inside, in stator groove, while preserving operating gap, air cushion of 1-2 mm between the tips and the electromagnets, and concentrate magnetic field at angle in groove center. Cores have tapered form from the arc and are tapering to windings ends, thus electromagnetic fields vector directions (Fig. 3. - 3.3.) cross over in stator groove center (Fig. 4. - 4.1.) and rotor tip center (Fig. 4. - 4.2.) at the same time. Core can be made assemblable from two parts for installation simplification. Electromagnets (Fig. 4. - 4.4.) are installed in 5 (five) and more rows (Fig. 4, Fig. 5, Fig. 6), at angle to rotor motion direction (Fig.4. - 4.5.) for rotor tips magnetic field pulling force optimal and effective operation. Electromagnets rows are installed with the displacement with respect to adjustment ones in such way that magnets stand in staggered arrangement with respect to each other (Fig 10), to exclude inert zones and for more optimal effectiveness. Both DC electromagnets and AC electromagnets, depending on the motor application place and power main type and necessary pulling force provision by means of magnetic field. All electromagnet windings are connected with the controller, for further current feed and control, by appropriate wires. Also it is required to calculate the correct electromagnets installation angle and the electromagnets winding turns number, considering cores material and power main to provide necessary parameters.

### 3. HOUSING

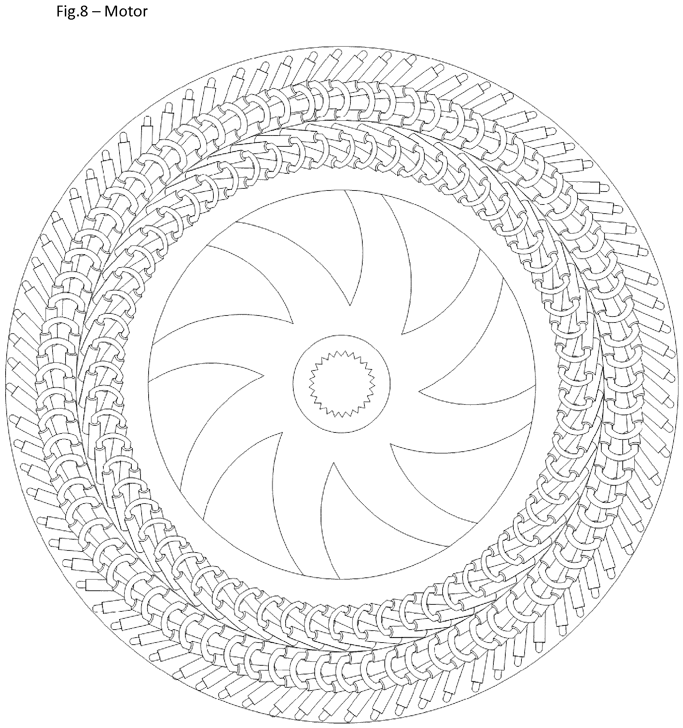

Housing - motor stand should strongly secure both the rotor with shaft and the stator. Rotor is installed in the stator during stator assembling (Fig.8). The bearing is used at place where shaft comes out of the housing. In this case the basic tasks are: preservation of operating gap between rotor tips and electromagnets cores in the stator groove; stator and rotor protection against moisture and dust.

### 4. CONTROLLER

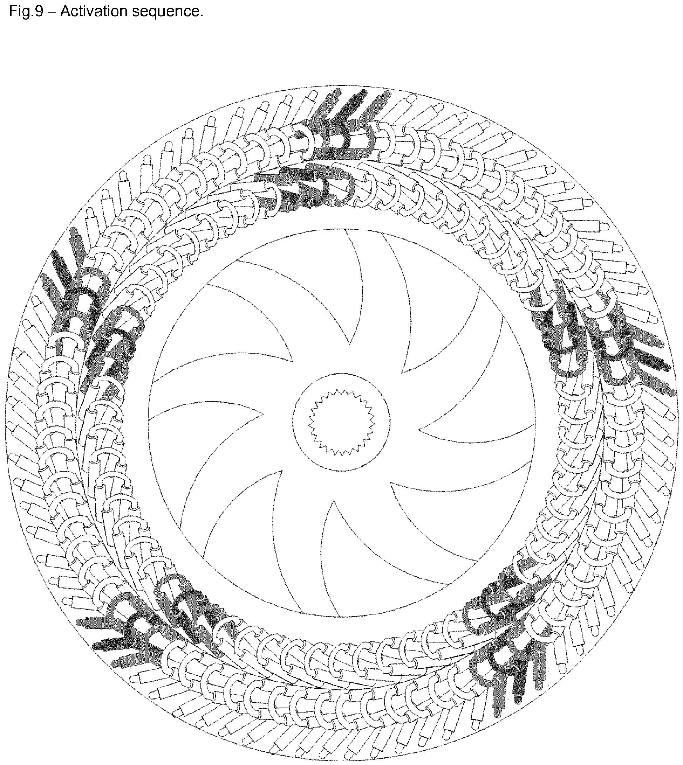

Operating control performance is required for motor normal operation, namely electromagnets cyclic sequential activation, by means of rapid current feed and successive required magnetic field generation. Current feed controller activates in parallel, at the same time adjacent electromagnets from different rows beginning with the upper row and moving to neighbouring row adjacent electromagnet, in this case several columns of electromagnets are activated at this time along stator entire perimeter depending on tips number. Neighbouring electromagnets are activated next according to the same principle, and so on in the same sequence, until complete cycle is completed and circle is described. Activated electromagnets points and their activation sequence is shown in example (Fig. 9, Fig. 10). Electromagnets activated at the same time are shown with green colour, red ones are activeted next, then electromagnets shown with blue color are activated and so on according to sequence until complete cycle is completed and then again the cycle is repeated with the acceleration. The important point is that electromagnetic fields necessary parameters will be achieved first of all by windings turns calculated number and cores composition. In this case rotor rotation speed depends on electromagnets activation cyclic rate. Shortness will make it possible to feed different currents, including high currents, that make it possible to increase magnetic fields parameters, depending on application place and technical capabilities. To speed-down you need to slow down the cycling and for full braking or emergency shutdown to activate all magnets simultaneously.

### 5. OPERATING PRINCIPLE

In fact, moving electromagnetic field is generated in stator groove at 4 and more points due to subsequent activation of electromagnets around the circumference at a very fast speed, at a speed of 3,000 cycles per minute and more, by continually recycling the activation. Moving concentrated electromagnetic fields set rotor into motion by pulling its tips. In fact, it turns out that at the moment of motor operation in unit time 4-5 and more transverse groups of 5 electromagnets, which consume energy more economically and more effectively than in standard motor, since not all electromagnets are constantly consuming electric power, but only the indicated ones, are in operation and under voltage. As a result rotor mechanical energy is transferred to the shaft. Diamagnetics utilization at rotor ends and utilization of solenoids with the straight core instead of U-shaped electromagnets and their installation with like poles, required to attain repulsion, is required in the case of electromagnets repulsive force utilization.

## Claims

1. Electromagnetic asynchronous motor comprising tire-shaped stator, composed of stator housing, 5 and more electromagnets rows, installed at angle along entire stator perimeter with operating magnetic cores facing inwards stator hollow groove for star-shaped rotor tips with shaft to transfer mechanical energy, controlled by electromagnet activation controller by means of short term current feed continually recirculating to electromagnets transverse groups at several points of the stator and generating twisting concentrated electromagnetic fields effect, differing by the fact that it utilizes electricity energy more effectively by means of the design.
